# EUROPEAN PATENT SPECIFICATION

(11) **EP 3 440 586 B1**
(45) Date of publication and mention of the grant of the patent: **03.05.2023**
(21) Application number: 16717938.1
(22) Date of filing: 21.04.2016
(51) Int. Cl.: G06F 21/62, G06F 21/78, G06F 12/14, G06F 21/57

(54) **METHOD FOR WRITE-PROTECTING BOOT CODE IF BOOT SEQUENCE INTEGRITY CHECK FAILS**
VERFAHREN ZUR WRITE-SCHÜTZEN BOOT CODE WENN DER INTEGRITÄTSPRÜFWERT DER BOOT REIHENFOLGE UEBEREINSTIMMT NICHT
PROCÉDÉ DE PROTECTION D'ÉCRITURE DU BOOT CODE SI L'INTEGRITE DE SEQUENCE BOOT ÉCHOUE

(43) Date of publication of application: 13.02.2019
(73) Proprietor: Huawei Technologies Co., Ltd., Longgang District Shenzhen, Guangdong 518129 (CN)
(72) Inventor: VLASCEANU, Ioan-Silviu, 80992 Munich (DE); SERB, Mihai, 80992 Munich (DE)
(74) Representative: Pfenning, Meinig & Partner mbB
(86) International application number: PCT/EP2016/058944
(87) International publication number: WO 2017/182089

(56) References cited:
- CN-A- 103 530 578
- US-A1- 2007 226 478
- US-A1- 2007 260 866
- US-A1- 2009 328 022
- SHIJUN ZHAO ET AL: "Providing Root of Trust for ARM TrustZone using On-Chip SRAM", INTERNATIONAL ASSOCIATION FOR CRYPTOLOGIC RESEARCH,, vol. 20141104:051144, 4 November 2014 (2014-11-04), pages 1-13, XP061017248, DOI: 10.1145/2666141.2666145 [retrieved on 2014-11-04]
- H Raj ET AL: "fTPM: A Firmware-based TPM 2.0 Implementation fTPM: A Firmware-based TPM 2.0 Implementation", , 9 November 2015 (2015-11-09), XP055330455, Retrieved from the Internet: URL:https://www.microsoft.com/en-us/resear ch/wp-content/uploads/2016/02/msr-tr-2015- 84.pdf
- "TCG TCG Specification TPM 2.0 Mobile Reference Architecture", , 16 December 2014 (2014-12-16), XP055271138, Retrieved from the Internet: URL:http://www.trustedcomputinggroup.org/w p-content/uploads/TPM-2-0-Mobile-Reference -Architecture-v2-r142-Specification_FINAL2 .pdf

## Description

### FIELD

The present application relates to the field of trusted computing.

### BACKGROUND

Trusted computing (TC), as defined by the Trusted Computing Group (TCG), is a mechanism for validating software integrity of a computing system. It includes a Trusted Platform Module (TPM) based on dedicated hardware.

In order to implement TC without dedicated hardware, Core Root of Trust for Measurement (CRTM) and TPM, conventionally provided as dedicated hardware components, need to be implemented in software. CRTM refers to a software component that cannot be modified except by legitimate access. CRTM can hence be used to ensure integrity of boot-relevant software components on the computing system, such as of software components required to boot an operating system kernel. An example of such software components is boot code loaded prior to executing the actual operating system kernel. Functionality provided by a CRTM includes measuring itself and/or a further software component. Measurements provided by a CRTM are adapted to allow determining whether the measured software component has been modified in comparison to a previous measurement.

US 2007/0226478 A1 discusses that boot code in a computer system may make itself inaccessible after completing its boot operations, thus preventing it from being modified by unauthorized code subsequent to the boot operation. In some examples, this inaccessibility may make the boot code itself unreadable, so that it cannot be read and analyzed by unauthorized code. One or more specific startup triggers, such as a system reset, may make the boot code accessible again so that it can perform its boot operations before making itself inaccessible again. Shijun Zhao et al discuss in the publication "Providing Root of Trust for ARM TrustZone using on Chip SRAM" (International Association for Cryptologic Research, Cryptology ePrint Archive, Report 2014/464) the design, implementation and evaluation of the root of trust for the Trusted Execution Environment (TEE) provided by ARM TrustZone based on SRAM Physical Unclonable Functions (PUFs). A building block provides the foundations for the root of trust: secure key storage and truly random source. The building block doesn't require on or off-chip secure non-volatile memory to store secrets, but provides a high-level security: resistance to physical attackers capable of controlling all external interfaces of the system on chip (SoC). Based on the building block, the root of trust is built consisting of seal/unseal primitives for secure services running in the TEE, and a software-only TPM service running in the TEE which provides rich TPM functionalities for the rich OS running in the normal world of TrustZone.

### SUMMARY

An objective of the present document is providing a method and a system for protecting computing devices against illegitimate software changes with improved flexibility and which allow retrofitting of existing systems.

According to a first aspect a method for implementing trusted computing is provided comprising: for each software component in a sequence of software components, executing the respective software component by a central processing unit, CPU, wherein the sequence of software components is stored on a storage device at a location from where the CPU is configured to load a first instruction at a boot process, said storage device being writable and configured to provide persistent write-protection, wherein said persistent write-protection is configured to be activated in response to a software instruction and, once activated, to persist until a next boot process starts, wherein at least the first of the software components in the sequence of software components is configured to implement a Core Root of Trust of Measurement, CRTM and to encrypt the measurement; measuring, by the respective software component, a next software component in the sequence, and comparing the resulting measurement to a reference measurement stored on the storage device; encrypting and storing, by the respective software component, the measurement of said software component on the storage device; activating said persistent write-protection of the storage device if the resulting measurement does not match the reference measurement or if no more software components remain to be measured; and executing an operating system kernel.

This first aspect is advantageous in that it ensures executing a sequence of software components, such as in the context of a booting process. At the same time, the first aspect ensures that the software components have not changed since an earlier execution of the steps of this aspect. This is accomplished by measuring software components and by comparing measurements to respective reference measurements, such as to reference measurements created when performing the above during an earlier boot process or an initial installation of the software components. In the context of a boot process, this ensures that the software components were not modified between both boot processes. Activating write protection in a stage of the booting process only if a measure of the software component to be loaded at next stage does not match a reference measure for said component allows for a secure update of said software component. By further combining these steps with activating persistent write-protection of a storage device where the software components reside, the first aspect provides a high degree of security against malevolent attacks, in particular against illegitimate changes after starting an operating system kernel. Further, since the security module is implemented on a software level adapted to interact with already existing hardware components, the method according to the first aspect can be easily implemented in existing system for improving security on these systems.

Since at least one of the software components is CRTM, CRTM can be implemented on a software level. The method according to the first aspect can therefore be easily implemented in existing system for improving security on these systems.

The implementation is advantageous for complying with conventional TC demands imposed on a CRTM. This is accomplished using conventional measurement techniques according to TC definitions.

According to a possible implementation form of the first aspect, the method further comprises running a security module within the operating system kernel, wherein the operating system kernel is configured to enforce isolation between kernel applications and user applications; and creating a restricted access area within the storage device, the created restricted access area being not accessible by user applications and the created restricted access area being accessible by the security module running within the operating system kernel.

This is advantageous for providing limited access to sensitive data and reference measurements in cases where these are stored in the restricted access area. Access may be granted even after booting the operating system kernel, if however only be granted to a security module inside the operating system kernel. Because the operating system kernel isolates user applications from kernel applications, user applications are prevented from interacting with the restricted access area. The restricted access area may be write-protected by persistent write-protection as discussed for the first aspect above.

The implementation of the method for implementing trusted computing according to the first aspect comprises storing the measurements of said software components prior to executing said operating system kernel.

This advantageously ensures that the first aspect may be carried out during a future boot process, thereby using measurements stored at the previous boot process. Thereby, the invention ensures that no modifications have been applied to the software components between both boot processes.

According to a second aspect a computing device is provided, comprising: a central processing unit, CPU, configured to load a first instruction at a boot process; and a writable storage device configured to provide persistent write-protection, wherein said persistent write-protection is configured to be activated in response to a software instruction and, once activated, to persist until a next boot process starts, said storage device further configured to store a sequence of software components at a location from where the CPU is configured to load a first instruction at a boot process and reference measurements associated with said sequence, wherein at least the first of the software components in the sequence of software components is configured to implement a Core Root of Trust of Measurement, CRTM and to encrypt the measurement; wherein the CPU is further configured to execute each respective software component in the sequence of software components, wherein each respective software component is configured to measure a next software component in the sequence, and to compare the resulting measurement to a reference measurement associated with the next software component, and to encrypt and store the resulting measurement on the storage device; said CPU further configured to activate said persistent write-protection of the storage device if the resulting measurement does not match the reference measurement or if no more software components remain to be measured, and further configured to execute an operating system kernel. If said persistent write-protection is already active, no new activation takes place.

This second aspect provides a computing device, which, although defined in terms of hardware components, provides validation of software integrity without dedicated hardware components. Instead, functionality for validating integrity is defined. This functionality advantageously ensures that software components, in particular software components executed during a boot process, have not been modified by illegitimate access. An inventive step is established by the second aspect based on the combination of a storage device capable to be write-protected via a software instruction, and of having a sequence of software components measure one another prior to enabling write-protection. Because no further write access is permitted after enabling write-protection until a next boot process starts, the second aspect provides a computing device with improved integrity of boot-relevant software components of a computing device. This prevents a third party from modifying the software components between boot processes without being detected at the next boot process. Further, activating write protection in a stage of the booting process only if a measure of the software component to be loaded at next stage does not match a reference measure for said component allows for a secure update of said software component.

In this manner, CRTM, which is conventionally implemented on a hardware level using dedicated hardware components, can be implemented on a software level, while keeping a security level, which is comparable with that of hardware based solutions. Therefore, by realizing the CTRM module on a software level, the first implementation form improves existing hardware CRTM modules by allowing a cheaper and easier implementation of said modules and by allowing the implementation of CTRM modules in existing computing devices, without the need of performing hardware modifications to the existing system. Further, during execution of a sequence of software components write-protection is only enabled if an inconsistency between an actual measurement of next a software component in the sequence and a reference measurement is detected. This allows to perform an update of the CRTM module while assuring a high level of security. Therefore, the present solution also represents an improvement over existing attempts to realize a hardware CRTM module, according to which the CRTM module cannot be updated in order not to compromise the security of the system.

A third possible aspect provides a method for implementing trusted computing, comprising: executing a security module within an operating system kernel, wherein the security module is configured to implement a Core Root of Trust of Measurement, CRTM and to encrypt and store the measurement; wherein the operating system kernel is configured to enforce isolation between kernel applications and user applications; creating a restricted access area within a storage device in a computing device, the created restricted access area being accessible by the security module being executed within the operating system kernel storing a sequence of software components at a location from where a CPU is configured to load a first instruction at a boot process, and performing, by the security module, reference measurements associated with said sequence and encrypting and storing, by the security module, the reference measurements on the restricted access area.

The third aspect ensures security of data stored in a restricted access area, in that access is only granted to a dedicated security module. By isolating kernel from user applications, illegitimate access from user applications is prevented. Further, since the security module is implemented on a software level and adapted to interact with already existing hardware components, the method according to the third aspect can be easily implemented in existing systems for improving security on these systems and provides a solution which is cheaper and more flexible compared to existing hardware solutions. Further, adding such a security module to an existing system and in particular the capability of the security module to create a restricted access area within a storage device allows the device to use specific trusted computing functionalities like secure storage, integrity reporting or the like through the same interface as systems implementing a hardware Trusted Platform Module, TPM, in unitary way (from an application perspective) and according to the well-defined TPM specification. Therefore, the solution provided by the third aspect allows for improved security.

The method for implementing trusted computing according to the third aspect includes the security module implementing Trusted Platform Module, TPM, functionalities.

Such TPM functionality may comprise encrypting data, a process also referred to as sealing. Sealing may be performed in combination with CRTM measurements that may be stored in dedicated registers, such as in PCR registers in the restricted access area. Sealing may be performed by one of the software components when executed during the boot process.

A possible implementation form of the method for implementing trusted computing according to the third aspect comprises enforcing isolation by configuring the operating system kernel to prevent access for user applications to physical or virtual memory of the computing device and/or configuring the operating system kernel to disable modifying operating system kernel functionality at runtime and/or configuring the operating system kernel to disable any possibility of replacing the running operating system kernel without rebooting the computing device.

In combination with the third aspect, this implementation provides various advantages. Configuring the operating system kernel to prevent access for user applications to memory advantageously ensures that data in the restricted area is not modified. Such data may comprise software components or measurements created and/or used during a boot process. Configuring the operating system kernel to disable modifying the very functionality of the operating system kernel advantageously prevents a third party from circumventing access restrictions. This advantage is also achieved by disabling any possibility of replacing the system kernel while running. Said configuring of an operating system kernel may be carried out when compiling the kernel, or may alternatively be carried out via system configuration applications when the kernel is already running.

The method for implementing trusted computing according to the third aspect comprises encrypting data stored in the restricted access area on the storage device.

This is advantageous for further improving protection of data stored in the restricted access area. Because the restricted access area can only be accessed under restricted conditions, such as during a boot process, means for encryption or decryption are unlikely to be available to an illegitimate person under these conditions. Using encryption therefore has a more significant effect than under conventional circumstances.

A fourth aspect is directed to a computing device, comprising: a storage device configured to provide persistent write-protection, wherein said persistent write-protection is configured to be activated in response to a software instruction and, once activated, to persist until a next boot process starts; and a central processing unit, CPU, configured to: execute a security module within an operating system kernel, wherein the security module is configured to implement a Core Root of Trust of Measurement, CRTM and to encrypt and store the measurement; wherein the operating system kernel is configured to enforce isolation between kernel applications and user applications; and creating a restricted access area within the storage device in a computing device, the created restricted access area being accessible by the security module being executed within the operating system kernel; wherein the storage device is configured to store a sequence of software components at a location from where the CPU is configured to load a first instruction at a boot process and the security module is configured to perform reference measurements associated with said sequence and to encrypt and store the reference measurements on the restricted access area.

This aspect provides an infrastructure for ensuring security of data stored on a restricted access area, and integrity of software components on the storage device which shall be preserved from illegitimate access. This is advantageously achieved by providing write-protection in response to a software instruction until a next boot process occurs. Because access is only possible from within a security module within an operating system kernel, and because user and kernel applications are kept separated by the kernel, access for user applications should be almost impossible. This provides a high degree of reliability against illegitimate modifications of system-relevant software components, in particular of software components running during a boot process. Further, since in the computing device of the fourth aspect the security module creating a restricted access area is implemented on a software level, the computing device according to the fourth aspect can be also realized by retrofitting existing systems and can be used for providing a cheap and effective security improvement of said existing systems.

This implementation ensures that each of a sequence of software components that is executed, such as executed during a boot process, is ensured not to have been modified since a last boot process, and is ensured to remain unmodified until a next boot process. This rests on the combination of a storage area that can be protected against write access via a software instruction, and of using such write-protection to store measurements of the software components. Together, this provides a high degree of integrity of the system, as it prevents any modifications between boot processes, while allowing to perform a secure update of the software components.

### BRIEF DESCRIPTION OF THE DRAWINGS

Figure 1 illustrates a method in accordance with embodiments of the invention.
Figure 2 illustrates a computing device in accordance with embodiments of the invention.
Figure 3 illustrates a system in accordance with embodiments of the invention.

### DETAILED DESCRIPTION

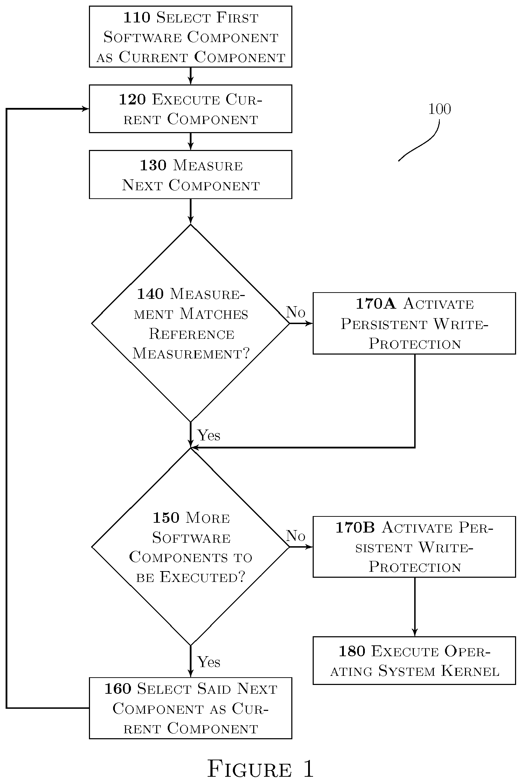

Figure 1A illustrates a method 100 according to embodiments of the invention. Method 100 is carried out by a central processing unit (CPU), such as CPU 240 discussed below, and is primarily intended to be carried out in the context of a boot process of a computing device. Booting a computing device typically requires one or more software components to be executed. For example, a first sector of a storage device, such as storage device 210 discussed below, may be read into main memory and be executed. Subsequently, one or more further software components of a chain of predefined software components are executed. Finally, an operating system kernel is launched.

The software components referred to herein may be any software components executed in preparation to loading an operating system kernel, and may include a boot loader. In some embodiments, one or more of the software components may represent entities implementing Core Root of Trust of Measurement, CRTM. They may therefore have capabilities of measuring themselves and/or one another. In particular, they may be capable of measuring the operating system kernel.

Method 100 starts at block 110 by selecting a first software component of a sequence of software components as a current component. The first software component may be selected because of its position in the sequence. In a specific embodiment, the first software component is selected because it is stored at a position where a CPU reads first code to be executed in the course of a booting process. In one embodiment, the entire sequence of software components is stored in one storage device.
example the current software component may be a boot loader module and the CPU may be able to perform a secure update of CRTM component.

At block 150, method 100 determines whether further software components remain in the sequence to be executed. In this case, method 100 proceeds to block 160, where the software component treated as a next component is used as the current component. Method 100 subsequently proceeds to block 120 discussed above, wherein the current component selected at block 160 is processed.

As long as measurements of current components match their associated reference measurements, method 100 will repeat blocks 120, 130, 140 and 150 until no more software components are left in the sequence. In this case, a measurement of the operating system kernel may be performed optionally. Subsequently, block 170B is reached. Block 170B comprises activating persistent write-protection of the storage device(s) or area(s) where the software components and/or the reference measurements are stored. Persistent write-protection is a feature available in certain memory devices, and capable of protecting a memory against write accesses. Particular advantage is achieved by method 100 when operating with memory devices which allow activating write-protection by means of software, such as by invoking a software instruction. Persistence of such memory devices may relate to write-protection remaining in force until a computing device that includes the memory device is booted the next time. This is of particular advantage when method 100 is performed in the course of a booting process itself, because it ensures that the memory device is not accessed by illegitimate parties at all after executing an operating system kernel (discussed below). Persistent write-protection is not only activated in response to determining a mismatch between a measurement and its reference. As is shown in figure 1, block 170B is also carried out if all measurements matched their reference measurements but no more software components were left in the sequence. As a consequence, method 100 always activates, at the latest at the end of the sequence of software components, persistent write-protection. Optionally, the method may determine, at step 170B, whether the persistent write-protection has already been activated in step 170A. If it is determined, at step 170B that the persistent write-protection is active, the method will execute the operating system kernel (step 180). In some embodiments, additional steps may be performed between blocks 140 and 170B, said steps raising an alert or other indication to notify an operator of a computing device performing method 100 of mismatches between measurements and reference measurements. Such alert may include a concrete specification of the software components that failed the check at block 140, as well as the exact measurements and reference measurements that led to the failure.

Method 100 as illustrated in figure 1 activates said persistent write-protection once a mismatch is detected at block 140, said activating illustrated by block 170A, and may proceed with processing all software components despite a mismatch. Such embodiments may be advantageous for providing, by corresponding alerts, a complete picture of all software components that failed at block 140. However, in certain embodiments, method 100 may stop executing further software components once a mismatch is detected at block 140.

As a final step, method 100 finally invokes an operating system kernel at block 180. If method 100 is executed in the context of a boot process, invoking the kernel concludes the boot process, effectively passing further control to the kernel.

In particular embodiments, a security module, such as security module 320 discussed below, may be running within the operating system kernel. The operating system kernel itself may be configured to isolate user applications from kernel applications in order to prevent user applications from accessing resources preserved to kernel applications. Enforcing isolation may include configuring the operating system kernel to prevent access for user applications to physical or virtual memory of the computing device and/or configuring the operating system kernel to disable modifying operating system kernel functionality at runtime. In certain embodiments, the operating system kernel may be configured to prevent replacing the running operating system kernel.

An example of configuring the operating system to prevent access for user applications to memory is disabling the creation of /dev/mem and/or /dev/kmem by configuring the Linux kernel source accordingly. Examples of disabling modifying kernel functionality include disabling the features kpatch, kgraft, and ksplice on Linux kernels. An example of preventing replacing a kernel al runtime is disabling kexec. The skilled person is aware of these concepts.

The storage device may further comprise a restricted access area, such as restricted access area 350, within the storage device. This restricted access area may not be accessible by user applications, but may be accessible by the security module running within the operating system kernel.

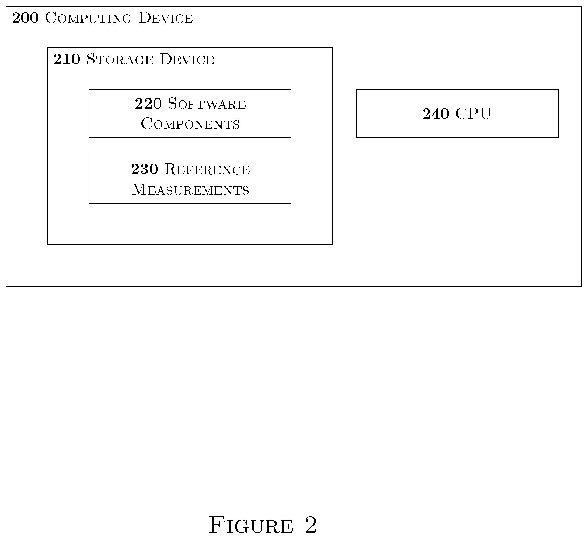

Figure 2 illustrates a computing device 200. Computing device 200 may be suited to carry out method 100 and may include a CPU 240 and storage device 210. Storage device 210 may be writable when powered on until write-protection is activated thereon, and may comprise software components 220 and reference measurements 230. In some embodiments, write-protection may be activated on the storage device 210 in response to a dedicated software instruction. An example of a storage device 210 providing such activation is a flash memory, in particular a NOR flash memory used for storing a sequence of software components to be executed during the booting phase of the computing device.

Software components 220 may be identical to the software components discussed above with regard to figure 1. Hence, they may represent pieces of code to be executed in a sequence when booting computing device 200. According to an advantageous development, the software component to be executed first in the sequence is a CRTM module. Reference measurements 230 may comprise measurements of software components 220, said measurements taken at an earlier execution of method 100. While software components 220 and reference measurements 230 are illustrated as residing in a same storage device 210, they may alternatively reside on different storage devices. In a preferred embodiment, storage device 210 is adapted to provide persistent write-protection according to the above discussion. In particular, persistent write-protection may be subject to activation through a software instruction.

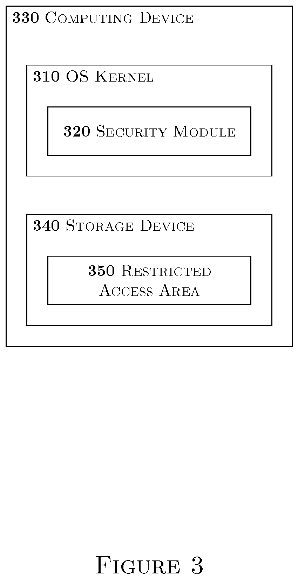

Figure 3 illustrates a computing device 200 with an operating system kernel 310 and a storage device 340. Computing device 200, operating system kernel 310 and storage device 340 may be identical to the components of the same name discussed above. In addition or alternatively, operating system kernel 310 is illustrated with a security module 320, whereas storage device 340 is illustrated with a restricted access area 350.

Security module 320 runs inside of the operating system kernel 310 and may be the only entity permitted to access storage device 340 and/or restricted access area 350 after the operating system kernel 310 has started to execute. In some embodiments, security module 320 may be capable of applying Trusted Platform Module, TPM, functionalities. TPM functionalities may include sealing data, a process known in TC as referring to providing access to data only if correct authentication is provided and if the data itself has not been modified since the last access or since writing the data.

According to further embodiments, security module 320 may be capable of encrypting data stored in the restricted access area 350 on the storage device. In some embodiments, security module 320 may be implemented as a software-based Trusted Platform Module (sTPM) and comprise corresponding functionality.

Compared to conventional software TPM modules, the security module of the present invention exploit a storage area in the storage device 340, which is physically separated from the storage of the computing device on which the kernel resides. The storage device 340 may be, for instance, a flash memory embedded in the computing device as an independent module. For example, the storage device 340 may be a NOR flash memory used for storing the sequence of software components to be executed during the booting phase of the computing device as described with reference to figure 2. In this manner, sensitive data accessed by the security module does not reside in memory locations accessible from user space applications running in the system after the kernel has been loaded, neither when the security module is loaded in system memory, nor when the sensitive data is at rest on the storage device 340, for instance in the restricted access area 350.

More clearly, the expression "sensitive data at rest" refers to the copy of sensitive data that resides in the storage device, regardless if it has been loaded in the system memory or not. In this case this sensitive data cannot be accessed by the user space applications because the kernel restricts access to the area on the storage device 340 where this sensitive data is stored.

During execution of the security module, which may be for instance a sTPM kernel module implementation, a copy of sensitive data in system (RAM) memory that is accessed by the security module cannot be accessed by userspace applications because the kernel naturally disables access from userspace applications to the kernel memory.

Restricted access area 350, just as storage device 340, may be write-protected through a software instruction issued by one or more software components, such as one or more of software components 220 discussed above. Operating system kernel 310 may be configured to isolate user applications from kernel applications, in order to prevent any access from outside the kernel to the restricted access area 350 and/or storage device 340. This configuration may be applied when compiling the operating system kernel 310, as is common with a number of known operating systems, such as Linux, FreeBSD, NetBSD, OpenBSD. Alternatively, configuration of the operating system kernel 310 may be carried out at runtime via dedicated configuration software. Effectively, such isolation may achieve that the restricted access area 350 is invisible to user applications.

Embodiments further comprise a computer-readable medium comprising instructions which, when executed by a processor, perform the method according to any of the embodiments described herein.

Although the present invention and its advantages have been described in detail, it should be understood that various changes, substitutions and alterations can be made herein without departing from the scope of the invention as defined in the appended claims.

## Claims

1. A method for implementing trusted computing, the method comprising:
for each software component (220) in a sequence of software components (220), executing the respective software component by a central processing unit, CPU (240), wherein the sequence of software components (220) is stored on a storage device (210) at a location from where the CPU (240) is configured to load a first instruction at a boot process, said storage device (210) being writable and configured to provide persistent write-protection, wherein said persistent write-protection is configured to be activated in response to a software instruction and, once activated, to persist until a next boot process starts, wherein each respective software component (220) is configured to measure a next software component (220) in the sequence and at least the first of the software components (220) in the sequence of software components (220) represents an entity implementing a Core Root of Trust of Measurement, CRTM;
measuring, by the respective software component (220), a next software component (220) in the sequence, and comparing the resulting measurement to a reference measurement (230) stored on the storage device (210);
storing, by the respective software component (220), the measurement of said software component (220) in Platform Configuration Registers, PCRs, in a restricted access area (350) on the storage device (210);
encrypting data stored in the restricted access area (350) on the storage device (210);
activating said persistent write-protection of the storage device (210) if the resulting measurement does not match the reference measurement or if no more software components (220) remain to be measured; and
executing an operating system kernel (310), wherein the operating system kernel (310) is configured to isolate user applications from kernel applications.

2. The method of claim 1, further comprising:
running a security module (320) within the operating system kernel (310); and
creating the restricted access area (350) within the storage device (210, 340), the created restricted access area (350) being not accessible by user applications and the created restricted access area (350) being accessible by the security module (320) running within the operating system kernel (310).

3. A computing device (200, 330), comprising:
a central processing unit, CPU (240), configured to load a first instruction at a boot process; and
a writable storage device (210) configured to provide persistent write-protection, wherein said persistent write-protection is configured to be activated in response to a software instruction and, once activated, to persist until a next boot process starts, said storage device (210) further configured to store a sequence of software components (220) at a location from where the CPU (240) is configured to load a first instruction at a boot process, and to store reference measurements (230) associated with said sequence, wherein at least the first of the software components (220) in the sequence of software components (220) represents an entity implementing a Core Root of Trust of Measurement, CRTM;
wherein the CPU (240) is further configured to execute each respective software component in the sequence of software components (220), wherein each respective software component (220) is configured to measure a next software component (220) in the sequence, and to compare the resulting measurement to a reference measurement (230) associated with the next software component (220), store the resulting measurement in Platform Configuration Registers, PCRs, in the restricted access area (350) on the storage device (210) and encrypt data stored in the restricted access area (350) on the storage device (210); said CPU (240) further being configured to activate said persistent write-protection of the storage device (210) if the resulting measurement does not match the reference measurement or if no more software components (220) remain to be measured, and further being configured to execute an operating system kernel (310), wherein the operating system kernel (310) is configured to isolate user applications from kernel applications.

## Patentansprüche

1. Verfahren zur Implementierung vertrauenswürdiger Datenverarbeitung, wobei das Verfahren umfasst:
Ausführen der jeweiligen Softwarekomponente durch eine zentrale Verarbeitungseinheit, CPU, (240) für jede Softwarekomponente (220) in einer Folge von Softwarekomponenten (220), wobei die Folge von Softwarekomponenten (220) auf einer Speichervorrichtung (210) an einem Speicherort gespeichert ist, von dem aus die CPU (240) konfigurationsgemäß eine erste Anweisung bei einem Bootvorgang lädt, wobei die Speichervorrichtung (210) beschreibbar und zum Bereitstellen von persistentem Schreibschutz konfiguriert ist, wobei der persistente Schreibschutz so konfiguriert ist, dass er in Reaktion auf eine Softwareanweisung aktiviert wird und, sobald aktiviert, bis zum Start eines nächsten Bootvorgangs bestehen bleibt, wobei jede jeweilige Softwarekomponente (220) zum Messen einer nächsten Softwarekomponente (220) in der Folge konfiguriert ist, und zumindest die erste der Softwarekomponenten (220) in der Folge von Softwarekomponenten (220) eine Entität darstellt, die eine "Core Root of Trust of Measurement", CRTM, implementiert;
Messen einer nächsten Softwarekomponente (220) in der Folge durch die jeweilige Softwarekomponente (220) und Vergleichen der resultierenden Messung mit einer Referenzmessung (230), die auf der Speichervorrichtung (210) gespeichert ist;
Speichern der Messung der Softwarekomponente (220) durch die jeweilige Softwarekomponente (220) in Plattformkonfigurationsregistern, PCRs, in einem Bereich mit eingeschränktem Zugriff (350) auf der Speichervorrichtung (210);
Verschlüsseln von Daten, die im Bereich mit eingeschränktem Zugriff (350) auf der Speichervorrichtung (210) gespeichert werden;
Aktivieren des persistenten Schreibschutzes der Speichervorrichtung (210), falls die resultierende Messung nicht mit der Referenzmessung übereinstimmt oder falls keine weiteren Softwarekomponenten (220) mehr zu messen sind: und
Ausführen eines Betriebssystemkernels (310), wobei der Betriebssystemkernel (310) so konfiguriert ist, dass er Benutzeranwendungen von Kernelanwendungen trennt.

2. Verfahren nach Anspruch 1, ferner umfassend:
Ausführen eines Sicherheitsmoduls (320) innerhalb des Betriebssystemkernels (310); und
Erstellen des Bereichs mit eingeschränktem Zugriff (350) innerhalb der Speichervorrichtung (210, 340), wobei Benutzeranwendungen nicht auf den erstellten Bereich mit eingeschränktem Zugriff (350) zugreifen können, und das Sicherheitsmodul (320), das innerhalb des Betriebssystemkernels (310) ausgeführt wird, auf den erstellten Bereich mit eingeschränktem Zugriff (350) zugreifen kann.

3. Datenverarbeitungsvorrichtung (200, 330), umfassend:
eine zentrale Verarbeitungseinheit, CPU, (240), die zum Laden einer ersten Anweisung bei einem Bootvorgang konfiguriert ist; und
eine beschreibbare Speichervorrichtung (210), die zum Bereitstellen von persistentem Schreibschutz konfiguriert ist, wobei der persistente Schreibschutz so konfiguriert ist, dass er in Reaktion auf eine Softwareanweisung aktiviert wird und, sobald aktiviert, bis zum Start eines nächsten Bootvorgangs bestehen bleibt, wobei die Speichervorrichtung (210) ferner zum Speichern einer Folge von Softwarekomponenten (220) an einem Speicherort konfiguriert ist, von dem aus die CPU (240) konfigurationsgemäß eine erste Anweisung bei einem Bootvorgang lädt, und zum Speichern von Referenzmessungen (230), die mit der Folge assoziiert sind, wobei zumindest die erste der Softwarekomponenten (220) in der Folge von Softwarekomponenten (220) eine Entität darstellt, die eine "Core Root of Trust of Measurement", CRTM, implementiert;
wobei die CPU (240) ferner zum Ausführen jeder jeweiligen Softwarekomponente in der Folge von Softwarekomponenten (220) konfiguriert ist, wobei jede jeweilige Softwarekomponente (220) so konfiguriert ist, dass sie eine nächste Softwarekomponente (220) in der Folge misst und die resultierende Messung mit einer Referenzmessung (230) vergleicht, die mit der nächsten Softwarekomponente (220) assoziiert ist, die resultierende Messung in Plattformkonfigurationsregistern, PCRs, im Bereich mit eingeschränkten Zugriff (350) auf der Speichervorrichtung (210) speichert und Daten verschlüsselt, die im Bereich mit eingeschränktem Zugriff (350) auf der Speichervorrichtung (210) gespeichert werden; wobei die CPU (240) ferner so konfiguriert ist, dass sie den persistenten Schreibschutz der Speichervorrichtung (210) aktiviert, falls die resultierende Messung nicht mit der Referenzmessung übereinstimmt oder falls keine weiteren Softwarekomponenten (220) mehr zu messen sind, und ferner zum Ausführen eines Betriebssystemkernels (310) konfiguriert ist, wobei der Betriebssystemkernel (310) so konfiguriert ist, dass er Benutzeranwendungen von Kernelanwendungen trennt.

## Revendications

1. Procédé pour mettre en oeuvre une informatique de confiance, le procédé comprenant les étapes suivantes :
pour chaque composant logiciel (220) dans une séquence de composants logiciels (220), exécuter le composant logiciel respectif par une unité centrale de traitement, CPU (240), dans lequel la séquence de composants logiciels (220) est stockée sur un dispositif de stockage (210) à un emplacement à partir duquel l'unité centrale de traitement (240) est configurée pour charger une première instruction lors d'un processus de démarrage, ledit dispositif de stockage (210) pouvant être écrit et étant configuré pour fournir une protection en écriture persistante, dans lequel ladite protection en écriture persistante est configurée pour être activée en réponse à une instruction logicielle et, une fois activée, pour persister jusqu'à ce qu'un processus de démarrage suivant démarre, dans lequel chaque composant logiciel respectif (220) est configuré pour mesurer un composant logiciel suivant (220) dans la séquence et au moins le premier des composants logiciels (220) dans la séquence de composants logiciels (220) représente une entité mettant en oeuvre une racine de confiance de mesure de base, CRTM ;
mesurer, par le composant logiciel respectif (220), un composant logiciel suivant (220) dans la séquence, et comparer la mesure résultante à une mesure de référence (230) stockée sur le dispositif de stockage (210) ;
stocker, par le composant logiciel respectif (220), la mesure dudit composant logiciel (220) dans des registres de configuration de plate-forme, PCR, dans une zone à accès restreint (350) sur le dispositif de stockage (210) ;
chiffrer les données stockées dans la zone d'accès restreint (350) sur le dispositif de stockage (210) ;
activer ladite protection persistante en écriture du dispositif de stockage (210) si la mesure résultante ne correspond pas à la mesure de référence ou s'il ne reste plus de composants logiciels (220) à mesurer ; et
exécuter un noyau de système d'exploitation (310), dans lequel le noyau de système d'exploitation (310) est configuré pour isoler les applications d'utilisateur des applications de noyau.

2. Procédé selon la revendication 1, comprenant en outre les étapes suivantes :
exécuter un module de sécurité (320) à l'intérieur du noyau de système d'exploitation (310) ; et
créer la zone d'accès restreint (350) dans le dispositif de stockage (210, 340), la zone d'accès restreint créée (350) n'étant pas accessible par les applications d'utilisateur et la zone d'accès restreint créée (350) étant accessible par le module de sécurité (320) s'exécutant dans le noyau du système d'exploitation (310).

3. Dispositif informatique (200, 330), comprenant :
une unité centrale de traitement, CPU (240), configurée pour charger une première instruction lors d'un processus de démarrage ; et
un dispositif de stockage inscriptible (210) configuré pour fournir une protection en écriture persistante, dans lequel ladite protection en écriture persistante est configurée pour être activée en réponse à une instruction logicielle et, une fois activée, pour persister jusqu'au démarrage d'un processus de démarrage suivant, ledit dispositif de stockage (210) étant en outre configuré pour stocker une séquence de composants logiciels (220) à un emplacement à partir duquel l'unité centrale de traitement (240) est configurée pour charger une première instruction lors d'un processus de démarrage, et pour stocker des mesures de référence (230) associées à ladite séquence, dans lequel au moins le premier des composants logiciels (220) dans la séquence de composants logiciels (220) représente une entité mettant en oeuvre une racine de confiance de mesure de base, CRTM ;
dans lequel l'unité centrale de traitement (240) est en outre configurée pour exécuter chaque composant logiciel respectif dans la séquence de composants logiciels (220), dans lequel chaque composant logiciel respectif (220) est configuré pour mesurer un composant logiciel suivant (220) dans la séquence, et pour comparer la mesure résultante à une mesure de référence (230) associée au composant logiciel suivant (220), stocker la mesure résultante dans des registres de configuration de plate-forme, PCR, dans la zone à accès restreint (350) sur le dispositif de stockage (210) et chiffrer les données stockées dans la zone à accès restreint (350) sur le dispositif de stockage (210) ; ladite unité centrale de traitement (240) étant en outre configurée pour activer ladite protection en écriture persistante du dispositif de stockage (210) si la mesure résultante ne correspond pas à la mesure de référence ou s'il ne reste plus de composants logiciels (220) à mesurer, et étant en outre configurée pour exécuter un noyau de système d'exploitation (310), dans lequel le noyau de système d'exploitation (310) est configuré pour isoler les applications d'utilisateur des applications de noyau.
